## Europäisches Patentamt

## European Patent Office

## Office européen des brevets

(19)

(11) Numéro de publication: **0 133 405 B1**

# FASCICULE DE BREVET EUROPEEN

(45) Date de publication du fascicule du brevet:
**01.04.87**

(21) Numéro de dépôt: **84401613.9**

(22) Date de dépôt: **01.08.84**

(51) Int. Cl.⁴: $C\ 02\ F\ 3/30$

(54) **Procédé de dénitrification des eaux souterraines en vue de leur potabilisation.**

(30) Priorité: **02.08.83 FR 8312733**

(43) Date de publication de la demande:
**20.02.85 Bulletin 85/8**

(45) Mention de la délivrance du brevet:
**01.04.87 Bulletin 87/14**

(84) Etats contractants désignés:
**BE DE FR GB IT NL**

(56) Documents cités:
**EP - A - 0 086 863**
**DD - A - 140 031**
**FR - A - 2 302 279**

(73) Titulaire: **BUREAU DE RECHERCHES GEOLOGIQUES ET MINIERES, 191, rue de Vaugirard, F-75737 Paris Cedex 15 (FR)**

(72) Inventeur: **Collin, Jean Jacques, 79, rue Gustave Flaubert, F-45100 Orléans La Source (FR)**
Inventeur: **Landreau, Alain, 4, rue Piedgrouille, F-45100 Orléans (FR)**
Inventeur: **Talbo, Henri, 30, rue Sully Prudhomme, F-35100 Rennes (FR)**
Inventeur: **Martin, Guy, 34, rue des Lauriers, 35510 Cesson Sévigné (FR)**
Inventeur: **Morvan, Jean, 25, rue Laennec, F-35340 Liffre (FR)**

(74) Mandataire: **Phélip, Bruno et al, c/o Cabinet Harlé & Phélip 21, rue de la Rochefoucauld, F-75009 Paris (FR)**

## Description

La présente invention a trait au domaine du traitement des eaux par voie biologique et concerne tout spécialement un procédé de dénitrification de l'eau au moyen de microorganismes utilisant des substrats carbonés (dénitrification par voie hétérotrophique).

La dénitrification biologique est un processus bien connu et qui commence à être appliqué industriellement dans le traitement des eaux à potabiliser.

La dénitrification autotrophique s'effectue en milieu anoxique par l'intermédiaire de bactéries comme les Thiobacillus dénitrificans qui utilisent l'oxygène de l'ion $NO_3^-$ pour oxyder le soufre.

Au contraire, la réduction des nitrates par voie hétérotrophique nécessite la présence d'un substrat carboné. Les filières industrielles utilisent l'éthanol ou l'acide acétique comme réducteur.

Des expériences réalisées sur certains échantillons de sol ont montré la capacité du sol à dénitrifier les eaux en présence de matières organiques d'origine végétale: luzerne ou paille (l'emploi de paille fraîche est préférable à celui de paille déjà compostée).

La composition du mélange gazeux produit est variable, l'azote moléculaire semblant croître avec la quantité de nitrates. En sol partiellement immergé, en présence de paille, la disparition de nitrates est très rapide (2 jours). Il apparaît dans tous ces essais que la réduction des nitrites est plus lente et le temps d'adaptation des microorganismes se traduit par une poussée de nitrites en début d'expérience.

Pour valoriser les co-produits de l'industrie agroalimentaire, on a déjà effectué des études sur la dénitrification d'eau usée par des résidus de récolte (de la paille ou des copeaux de bois). On a pu ainsi obtenir une réduction moyenne de 40% de la teneur en $NO_3$.

Toutefois, ces expériences antérieures n'ont pas dépassé le stade du laboratoire et, à la connaissance du demandeur, il n'a jamais été proposé jusqu'à présent, un procédé simple et facile à mettre en oeuvre, permettant la dénitrification biologique des eaux par un traitement in situ, en vue de permettre la potabilisation des eaux de nappes souterraines. L'invention a pour objet un tel procédé, dans lequel le traitement est réalisé sur le site de captage d'eau potable.

A titre de documents illustrant la technique antérieure dans le domaine de la dénitrification des eaux, on peut citer les brevets FR-A-2.302.279 et DD-A-140.031.

Le brevet FR-A-2.302.279 concerne un procédé pour éliminer les composés azotés contenus dans l'eau, et propose à cet effet d'utiliser des microorganismes destinés à la dénitrification des eaux, ces microorganismes pouvant être introduits dans le sol. Dans un tel procédé, les microorganismes dénitrifiants sont introduits dans l'eau à traiter. De même, celle-ci est additionnée d'une substance carbonée nutritive liquide, par exemple une solution de glucose, l'eau à introduire dans le sol étant en outre rendue basique au moyen d'un hydroxyde alcalin, dans le cas où le sol a une réaction acide. Il faut également noter que le mélange dénitrifiant est directement introduit dans l'aquifère. La réaction de dénitrification se produit donc au sein même de l'aquifère. Le brevet FR-A-2.302.279 décrit donc un procédé dénitrification qui utilise le sous-sol comme milieu de réaction, mais qui ne permet pas de réaliser la potabilisation de l'eau, c'est-à-dire d'obtenir une eau dont la composition chimique est conforme aux normes de potabilité. En outre, les microorganismes ou bactéries utiles pour la dénitrification sont introduits avec l'eau, ce qui rend donc nécessaire un enrichissement artificiel en bactéries dénitrifiantes de l'eau à traiter.

Le brevet DD-A-140.031 concerne la dénitrification des eaux stagnantes, provenant par exemple des lacs des étangs. Le procédé décrit dans ce brevet consiste à mettre en place au fond de l'eau un réacteur de dénitrification. Celui-ci contient un support pour les bactéries, par exemple de la paille. Celle-ci est mise en oeuvre comme matériau de remplissage et non comme substance carbonée nutritive pour les microorganismes, cette substance étant une substance liquide introduite avec l'eau. D'ailleurs, le brevet DD-A-140.031 suggère de remplacer le corps de remplissage du réacteur par un matériau biologiquement inerte. Il n'est pas enseigné dans ce document antérieur un procédé qui permet de traiter directement les eaux souterraines pour obtenir une eau potable en tirant directement profit des microorganismes ou bactéries présents dans le sous-sol, et sans qu'il soit nécessaire d'utiliser un réacteur situé dans le sous-sol.

La demande EP-A-0.086.863, publiée le 31 août 1983, décrit un procédé de dénitrification biologique des eaux, dans lequel les eaux à traiter sont directement dénitrifiée dans le sous-sol. Dans un tel procédé, l'eau à traiter est enrichie en hydrogène et/ou en carbone organique. Le puits de captage recueille directement les eaux provenant des puits d'infiltration environnants, le niveau d'injection dans ces derniers de l'eau à traiter étant inférieur au niveau de l'eau dans le puits de captage. Ce procédé connu nécessite un enrichissement de l'eau à traiter, ce qui le rend coûteux. De plus, il ne prévoit pas une épuration hétérotrophe complète dans le sous-sol, en raison de la position relative des sites d'infiltration et du puits de captage.

La présente invention concerne un procédé de dénitrification biologique au moyen de microorganismes de type hétérotrophe, mettant en oeuvre un substrat carboné. Il s'agit d'un procédé de dénitrification des eaux souterraines en vue de leur potabilisation, le but à atteindre étant non seulement de réduire le taux de nitrates des eaux pompées dans le milieu aquifère, mais également d'obtenir que l'eau extraite de son milieu réponde aux normes de potabilité pour la consommation humaine. Les exigences de potabilité font qu'il est nécessaire d'éliminer les composés organiques indésirables qui se forment lors de la réaction de dénitrification par voies biologiques et hétérotrophique.

L'invention a pour objet un tel procédé sans qu'il soit nécessaire de recourir à un enrichissement artificiel en bactéries dénitrifiantes.

Les objectifs de l'invention sont obtenus d'une manière simple, par un procédé qui tire parti des caractéristiques du sous-sol.

L'invention concerne donc un procédé de dénitrification biologique par voie hétérotrophe des eaux souterraines, en vue de leur potabilisation, dans lequel on introduit les eaux à traiter dans des sites d'infiltration et on utilise, au moins en partie, le sous-sol comme zone de réaction, l'eau traitée étant captée dans la nappe aquifère, caractérisée en ce qu'on effectue la réaction de dénitrification sans recourir à un enrichissement artificiel en bactéries dénitrifiantes, en ce qu'on réalise la réaction de dénitrification avant l'injection dans la nappe aquifère, en faisant parvenir dans celle-ci les eaux dénitrifiées provenant de la zone de réaction, après que celles-ci ont traversé une couche du sous-sol ou d'un matériau artificiel séparant la zone de réaction et la nappe aquifère et en ce que, après passage sur les sites d'infiltration, l'eau dénitrifiée est injectée dans la zone non saturée à proximité du captage des eaux envoyées en distribution.

Le procédé de l'invention peut être mis en oeuvre de diverses manières. Il est applicable, avec le plus d'avantages, aux eaux présentant de fortes teneurs en nitrate, telles que les eaux souterraines. Ainsi, le procédé de l'invention trouve une application particulièrement intéressante pour la potabilisation des eaux de nappes souterraines.

Selon la caractéristique essentielle de l'invention, le sous-sol lui-même est utilisé, au moins en partie, comme zone de réaction pour la dénitrification biologique. Ainsi, le traitement peut-il être effectué en totalité dans le sous-sol lui-même, ou seulement en partie dans celui-ci: dans ce dernier cas, une partie de la réaction se fait hors sol, par exemple dans un bac ou une colonne extérieure, la percolation étant effectuée par voie ascendante ou descendante.

Cependant, le mode de réalisation préféré de l'invention consiste à utiliser le sous-sol pour réaliser la plus grande partie possible de la zone de réaction. Dans certains cas, cependant, la nappe aquifère est très proche du sol, de sorte que le trajet séparant celui-ci de la nappe n'est pas suffisant pour réaliser une zone de réaction procurant une dénitrification satisfaisante de l'eau à traiter. Dans un tel cas, il peut devenir nécessaire de prolonger hors sol la zone de réaction, ainsi qu'on l'a dit précédemment. Toutefois, dans de nombreux cas, la hauteur séparant le sol de la nappe aquifère est suffisante pour que la réaction de dénitrification se réalise.

Selon l'invention, on constitue des sites d'infiltration en réalisant des bassins ou puits, dont la répartition et le nombre doivent être adaptés aux conditions locales. Il faut tenir compte, en effet, des caractéristiques du sous-sol, de celles de la nappe aquifère, de la vitesse d'écoulement de l'eau en sous-sol, et autres paramètres connus de l'homme du métier. Ainsi, si le procédé de l'invention peut en principe être mis en oeuvre avec un puits d'infiltration, les conditions pratiques imposent un nombre de puits ou bassins supérieur à 1, et en général égal à 2, 3, 4 ou davantage.

Par ailleurs, on capte de manière connue l'eau traitée de la nappe aquifère. Après passage sur les sites d'infiltration, l'eau dénitrifiée est injectée dans le milieu aquifère à proximité du captage des eaux envoyées en distribution. Suivant les conditions hydrogéologiques, cette réinjection se fera soit directement dans l'aquifère, soit dans la zone non-saturée, ce qui permettra un affinement complémentaire de l'eau dénitrifiée, notamment en ce qui concerne les composés organiques résiduels.

Les dimensions des sites d'infiltration, leur nombre et leur emplacement par rapport au captage principal sont fonction des conditions opératoires nécessaires à la bonne marche du procédé et des caractéristiques hydrogéologiques et hydrodynamiques de la nappe d'eau souterraine.

D'une façon générale, on a intérêt à ce que le captage soit proche de la sortie des puits d'infiltration. Une configuration convenable consiste à utiliser un captage central entouré de puits d'infiltration, régulièrement répartis autour de lui, et par exemple au nombre de 3 ou 4.

Il n'est pas nécessaire que le même puits de captage serve à la distribution et à la réinjection de l'eau pour l'alimentation des puits d'infiltration. Cependant, dans ce mode de réalisation, qui est simple, l'eau est captée dans une zone unique de prélèvement pour être renvoyée partiellement à la distribution, tandis que le reste est utilisé pour l'injection en vue d'un retraitement. En variante, on peut prévoir un ouvrage de captage pour la distribution et un autre ouvrage dans lequel l'eau captée est réinjectée dans les sites d'infiltration.

Lorsque les conditions hydrogéologiques le permettent, notamment quand le niveau de la nappe, en période de hautes eaux, ne se situe pas trop près de la surface du sol, la totalité du traitement est réalisée en sous-sol, et il convient donc de préparer les puits d'infiltration pour permettre la réaction hétérotrophique de dénitrification.

A cet effet, le procédé de l'invention tire profit des enseignements de la technique antérieure, mais en l'adaptant aux conditions d'application du procédé. Ainsi, il est très important de noter que, selon l'invention, il n'y a pas d'enrichissement artificiel en bactéries dénitrifiantes. Celles-ci se développent de manière autonome: en effet, le milieu dénitrifiant utilisé favorise le développement des bactéries dénitrifiantes potentiellement présentes dans la plupart des nappes souterraines. Dans certains cas il est avantageux d'ajouter du phosphate au mélange dénitrifiant pour accélérer le développement des bactéries. L'utilisation du sous-sol comme zone de réaction, procure donc des résultats extrêmement avantageux.

Ceux-ci sont également obtenus grâce au fait que l'écoulement de l'eau se fait naturellement dans le sous-sol avec une vitesse lente, par exemple de l'ordre de 0,5 m/h, ce qui permet une dénitrification poussée de l'eau à traiter.

La réaction de dénitrification selon l'invention nécessite la présence d'un substrat carboné. La substance carbonée utilisée à cet effet est constituée de matériaux solides hydrocarbonés biodégradables. Pour cela, on pourra utiliser par exemple certains co-produits de l'industrie agro-alimentaire, des résidus de récolte tels que la paille, ou encore des copeaux de bois. Les meilleurs résultats ont été obtenus avec la paille.

Complémentairement, la réaction est effectuée en présence d'un support minéral. La nature de celui-ci varie selon les caractéristiques du sous-sol. Si, après avoir creusé les puits d'infiltration, on constate que le terrain offre, au moins partiellement, des caractéristiques convenables pour le support minéral, on peut réutiliser le remblai en le mélangeant avec la matière organique carbonée, telle que la paille. Dans de nombreux cas cependant, il convient d'enrichir le sol et même parfois de renouveler entièrement le sous-sol naturel des puits d'infiltration. Il est en effet préférable de choisir un support minéral qui fournit les résultats les plus satisfaisants sur le plan physico-chimique. Pour ce qui concerne la présentation physique, on donne la préférence à un mélange contenant du sable. Pour des considérations chimiques, on utilise avec avantage un mélange contenant une roche carbonatée broyée permettant de tamponner le milieu qui a tendance à s'acidifier lors de la réaction de dénitrification; cette correction du pH du milieu permet d'éviter une chute prématurée du rendement de la réaction. Dans un mode de réalisation préféré, le maerl a été utilisé comme substance carbonatée (sable constitué d'éléments de squelettes de divers coquillages). Outre son pouvoir tampon, le maerl, de par sa grande porosité, offre de nombreux sites de fixation aux bactéries dénitrifiantes.

Il apparaîtra clairement à l'homme du métier qu'on peut faire appel à des combinaisons très variées de substances carbonées et de support minéral. Selon l'invention, les meilleurs résultats ont été obtenus avec la combinaison de la paille et de maerl. On a constaté en effet, que cette combinaison offrait les meilleures facultés de dénitrification en réalisant le pH optimal pour le développement des bactéries dénitrifiantes. Par ailleurs, la paille représente une substance carbonée abondante et très bon marché.

Il va sans dire qu'à des périodes de temps déterminées, il convient de renouveler le contenu des puits d'infiltration. A cet effet, on peut par exemple injecter de l'eau sous pression à la partie basse du puits. Le matériau de remplissage usé est ainsi évacué à la partie haute du puits, après quoi on procède à son remplacement par un produit de remplissage neuf.

La réaction de dénitrification par voie hétérotrophe ayant pour effet de produire des dérivés dont des composés organiques, il est important que l'eau dénitrifiée subisse un affinage complémentaire par passage à travers toute substance susceptible de conduire à l'élimination de ces composés. A cet égard, on a déjà noté précédemment que la réinjection de l'eau dans la zone non saturée, en dehors de la nappe aquifère, permet de réaliser très simplement cet affinage complémentaire, simplement en tirant partie des caractéristiques du sous-sol. Dans d'autres circonstances, et notamment si une partie de la réaction est effectuée hors sol, il peut devenir nécessaire de faire appel à des substances additionnelles, du type charbon actif par exemple, qui sont connus de l'homme du métier.

Les différents constituants du mélange (paille, sable, maerl, charbon actif éventuel) peuvent être employés dans des proportions pouvant varier dans de larges limites selon les paramètres opératoires adoptés et les contraintes fixées (débits d'alimentation, vitesse de percolation, charge en nitrates, objectif fixé en rendement...).

Toutes ces opérations de réglage et de contrôle sont à la portée de l'homme du métier, et ne sortent pas du cadre de la présente invention.

Dans sa forme préférée, l'invention propose un procédé de dénitrification in situ avec réinjection en nappe de l'eau dénitrifiée utilisant:

— un substrat carboné d'origine naturelle, tel que la paille,

— un support minéral de préférence le maerl possédant un pouvoir tampon pour le pH qui a un effet correcteur sur la qualité de l'eau,

— le pouvoir filtrant du terrain pour épurer l'eau, ce qui permet l'élimination des composés organiques susceptibles de se former lors de la réaction de dénitrification,

— une vitesse lente de filtration (quelques dizaines de cm/h) permettant de mieux supporter de petites variations de débits pénalisantes du point de vue rendement de la dénitrification,

— le sous-sol comme site d'infiltration permet de conserver une température constante sans dépense d'énergie. Les bactéries sont très sensibles aux écarts de température, ce qui a pour effet de faire chuter temporairement le rendement de la réaction. Cet inconvénient n'existe pas dans l'invention.

Comme autre avantage d'un tel procédé, on notera aussi que le produit résiduel de la dénitrification (carbonate - lignine) est un résidu non polluant valorisable en agriculture.

Le procédé présente donc des avantages tout à fait décisifs, auxquels s'ajoute la simplicité de sa mise en oeuvre.

L'invention sera encore illustrée sans être aucunement limitée par la description ci-après faite en référence aux dessins annexés sur lesquels:

Fig. 1 représente une élévation-coupe illustrant d'une manière schématique une installation pour la mise en oeuvre du procédé de l'invention;

Fig. 2 est une vue analogue à la figure 1 illustrant une variante de mise en oeuvre du procédé.

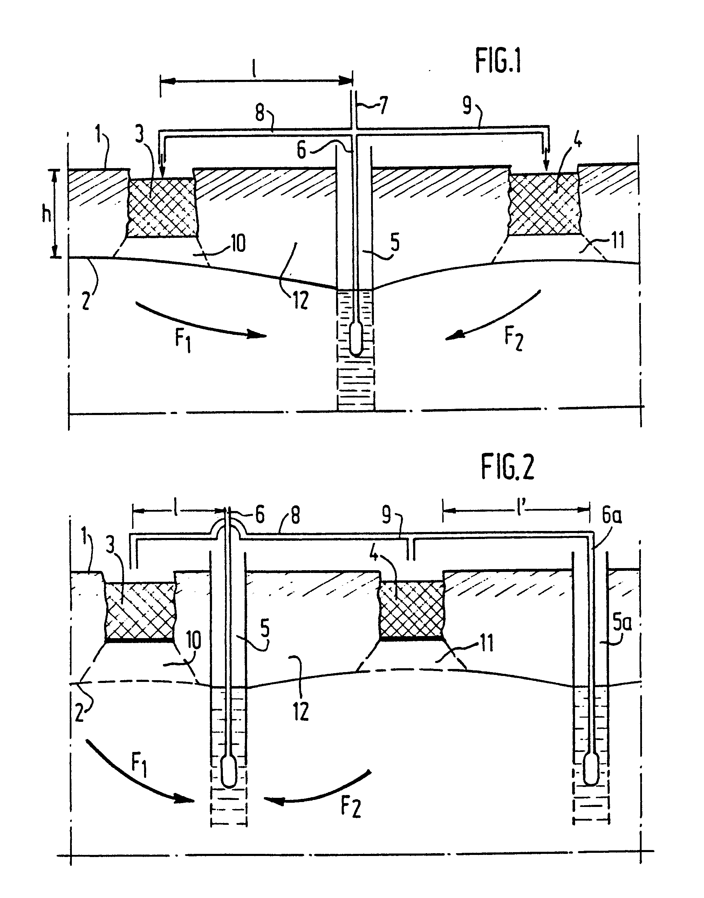

La figure 1 représente schématiquement une installation en sous-sol pour la mise en oeuvre du procédé de l'invention. Ce choix est fait préférentiellement lorsque la hauteur h séparant la surface du sol (1) et le niveau de la nappe souterraine (2) est suffisante, en d'autres termes, lorsque le niveau de la nappe (2) en période de hautes eaux ne se situe pas trop près de la surface (1).

Conformément à l'invention, un certain nombre de puits d'infiltration (3, 4) sont prévus. Dans l'exemple de réalisation représenté ces puits sont au nombre de quatre, répartis régulièrement autour d'un puits (5) de captage central. Les divers puits (3, 4) après avoir été creusés, sont remplis d'un mélange permettant d'assurer la dénitrification et comportant essentiellement un substrat carboné, de préférence de la paille, et un support minéral, de préférence du sable et/ou du maerl. Le puits de captage (5) est exécuté de la manière usuelle. L'ouvrage (5) comporte une canalisation (6) servant au prélèvement de l'eau potabilisée. Cette eau peut être directement utilisée à la distribution dans la canalisation (7). Des dérivations (8, 9) permettent d'alimenter les puits (3, 4). On a représenté en (12) la zone non saturée. L'eau à traiter passe par les sites d'infiltration (3, 4) puis dans les cônes d'infiltration (10, 11), qui peuvent eux-mêmes constituer une zone saturée selon les conditions d'expérimentation et la nature du sous-sol. La présence de ces zones (10, 11) est favorable pour assurer une élimination complémentaire des matières organiques restant dans l'eau dénitrifiée. On a représenté par les flèches (F1, F2) le trajet de l'eau dénitrifiée jusqu'à l'ouvrage de captage (5).

Dans la variante représentée à la figure 2, les mêmes signes de référence désignent les mêmes éléments qu'à la figure 1. La différence consiste en ce qu'il y a deux ouvrages de captage, l'un (5) destiné à la distribution directe en (6) de l'eau potabilisée, et l'autre (5a) permettant par l'intermédiaire de la canalisation (6a) et des dérivations (8, 9) d'alimenter les sites d'infiltration (3, 4).

Conformément au mode de réalisation de la figure 2, il convient d'éviter d'une part les interférences des pompages des puits 5 et 5a entre eux et d'autre part qu'une partie des eaux dénitrifiées issues des zones 10 et 11 ne retournent au puits 5a. A cet effet, on choisit la distance l' très supérieure à l, de manière que les puits 5 et 5a soient éloignés l'un de l'autre. Ainsi le puits 5a est disposé hors des sites d'infiltration 3 et 4.

Il va sans dire que d'autres configurations peuvent être adoptées par l'homme du métier, selon les contraintes hydrogéologiques existantes. Ainsi, le choix du nombre de sites d'infiltration, de leurs dimensions et de leur emplacement par rapport au captage principal (voir distance 1 sur la figure 1) est à la portée de l'homme du métier, en raison des caractéristiques locales du sous-sol, ainsi que des paramètres désirés pour le procédé.

On notera que le procédé de l'invention est simple à mettre en oeuvre. L'énergie nécessaire au traitement est très réduite. D'un point de vue protection de l'environnement, le procédé est également très favorable, car le site naturel est respecté, l'ensemble des opérations se faisant en sous-sol. Les investissements sont réduits et le coût d'exploitation est très faible car il n'est pas nécessaire d'utiliser de réactifs chimiques, la dénitrification étant réalisée de manière hétérotrophe par les bactéries dénitrifiantes se trouvant dans le sous-sol.

On notera également que le matériau usé, par exemple le mélange de paille et de maerl ayant servi à la réaction, peut être utilisé en agriculture, à titre d'amendement calcaire et organique. Cette valorisation du matériau usé constitue un avantage supplémentaire du procédé de l'invention.

Le procédé de l'invention sera encore illustré par les exemples qui suivent. Ceux-ci ont été réalisés dans des conditions expérimentales simulant les conditions réelles existant dans le sous-sol.

### Exemple 1

Dans cet exemple, on a simulé les conditions existant dans le sous-sol en utilisant une colonne de 1,30 m de hauteur et de 60 mm de diamètre remplie d'un mélange de sable et de paille à 10% de paille en poids, à savoir de 200 g de paille hachée et de 2 kg de sable. Le débit d'eau était égal à 500 ml/hr environ.

On a utilisé une percolation ascendante à une vitesse d'environ 20 cm/hr. La température de l'eau a varié entre 12°C et 20°C suivant les conditions climatiques ambiantes. L'essai a été fractionné en trois périodes distinctes. Les résultats obtenus à la dénitrification sont indiqués dans le tableau 1. Les teneurs figurant au tableau correspondent, pour la période considérée, à la moyenne calculée à partir des concentrations journalières mesurées.

### TABLEAU I

| Période | Moyenne de la teneur en nitrates en entrée de colonne (en mg/l) | Moyenne de la teneur en nitrates en sortie de colonne (en mg/l) |
|---|---|---|
| du 31.01.83 au 18.02.83 | 90 | 6 |
| du 31.02.83 au 11.03.83 | 85 | 2 |
| du 14.03.83 au 01.04.83 | 105 | 27 |

### Exemple 2

On a utilisé une colonne et des conditions expérimentales identiques à celles de l'exemple 1 mais on a remplacé le mélange de sable et de paille par un mélange de maerl et de paille, à savoir de 185 g de paille hachée et 1,4 kg de maerl. Les résultats obtenus sont rassemblés au tableau II, les mesures ayant été faites comme à l'exemple 1.

### TABLEAU II

| Période | Moyenne de la teneur en nitrates en entrée de colonne (en mg/l) | Moyenne de la teneur en nitrates en sortie de colonne (en mg/l) |
|---|---|---|
| du 14.03.83 au 30.03.83 | 106 | 11 |
| du 01.04.83 au 15.04.83 | 90 | 2 |
| du 18.04.83 au 06.05.83 | 104 | 18 |

### Exemple 3

On a utilisé une colonne et des conditions expérimentales identiques à celle de l'exemple 1, mais on a remplacé le mélange de sable et de paille par un mélange de tourbe et de sable à 50% de tourbe en poids, à savoir de 400 g de tourbe et de 400 g de sable. Les résultats obtenus sont rassemblés au tableau III, les mesures ayant été faites comme à l'exemple 1.

*TABLEAU III*

| Période | Moyenne de la teneur en nitrates en entrée de colonne (en mg/l) | Moyenne de la teneur en nitrates en sortie de colonne (en mg/l) |
|---|---|---|
| du 21.02.83 au 11.03.83 | 90 | 89 |
| du 14.03.83 au 01.04.83 | 100 | 99 |
| du 05.04.83 au 22.04.83 | 90 | 85 |

*Exemple 4*

On a utilisé une colonne et des conditions expérimentales identiques à celles de l'exemple 1, mais on a remplacé le mélange de sable et de paille par un mélange de sable et de sulfure de fer, à 50% en volume de sulfure de fer, à savoir de 350 cm³ de sulfure de fer et de 350 cm³ de sable. Les résultats obtenus sont rassemblés au tableau IV, les mesures ayant été faites comme à l'exemple 1.

*TABLEAU IV*

| Période | Moyenne de la teneur en nitrates en entrée de colonne (en mg/l) | Moyenne de la teneur en nitrates en sortie de colonne (en mg/l) |
|---|---|---|
| du 05.04.83 au 22.04.83 | 89 | 73,6 |
| du 25.04.83 au 20.05.83 | 100 | 76 |
| du 24.05.83 au 10.06.83 | 94 | 28 |

Il ressort des exemples ci-dessus que les mélanges des exemples 1 et 2 respectivement sable-paille et sable-maerl donnent les meilleurs résultats de dénitrification. On notera en particulier que, dans l'exemple 2, le mélange sable-maerl fournit, à l'issue de la 3ème période, un rendement de dénitrification de 83% alors que le mélange sable-paille de l'exemple 1 ne fournit qu'un rendement de 74%. Le mélange sable-maerl est donc préféré.

On a réalisé un dispositif expérimental:

Des essais de dénitrification de l'eau souterraine ont été réalisés sur une nappe alluviale. Le dispositif testé est le suivant:

— un forage central sur lequel le débit pompé est maintenu aux alentours de 3 m³/h,

— 3 réacteurs remplis d'un mélange dénitrifiant composé de paille broyée et maerl,

— 3 plots d'infiltrations, chaque plot étant associé à un réacteur.

Chaque réacteur, ainsi que chaque plot d'infiltration qui lui est associé, est situé à une distance de 15 mètres du forage central. Dans notre expérimentation, les réacteurs sont hors sol et constitués par des cuves remplies d'1 m³ de mélange dénitrifiant. Le débit d'eau circulant par voie ascendante au travers du mélange est de 0,3 m³/h. La surface de chaque plot d'infiltration est de 1 m².

Les résultats obtenus pendant un mois de fonctionnement du système sont les suivants:

*Etat initial:*

La concentration en nitrates mesurée sur l'eau du forage central était de 60 mg/l.

*Après 10 jours de fonctionnement*

| | Température de l'eau | pH | Résistivité ($\Omega \times$ cm à 20°C) | Nitrates (mg/l) | Nitrites (mg/l) | Azote ammoniacal (mg/l) | Matières organiques mg/l-oxydabilité au permanganate de potassium |
|---|---|---|---|---|---|---|---|
| forage central | 11°6 | 5,3 | 4 444 | 48.5 | 0,03 | 0,1 | 0,125 |
| teneur moyenne calculée sur la sortie des 3 réacteurs | 9°5 | 7,4 | 2 100 | 7 | 0,6 | 0,1 | 13,8 |
| piézomètre intermédiaire de contrôle (1) | | 6,3 | 3 450 | 40 | 0,18 | | 1,65 |
| caractéristiques de l'eau de la nappe (2) | | 5,6 | 4 000 | 52 | 0,09 | | 0,2 |

(1) ouvrage situé entre un plot d'infiltration et le forage central à une distance de 10 m de ce dernier.

(2) mesurée sur un ouvrage situé en amont hydraulique du forage central à une distance d'environ 50 m de celui-ci.

*Après 20 jours de fonctionnement*

| | Température de l'eau | pH | Résistivité ($\Omega \times$ cm à 20°C) | Nitrates (mg/l) | Nitrites (mg/l) | Azote ammoniacal (mg/l) | Matières organiques mg/l- oxydabilité au permanganate de potassium |
|---|---|---|---|---|---|---|---|
| forage central teneur moyenne calculée sur la sortie des 3 | 11°4 | 5,4 | 4 000 | 42,5 | 0,05 | 0,5 | 0,05 |
| réacteurs piézomètre intermédiaire | 9°5 | 7,15 | 1 950 | 7 | 0,55 | 0,2 | 7 |
| de contrôle (1) caractéristiques de l'eau de la | 10°3 | 5,7 | 3 570 | 41 | 0,13 | 0,3 | 0,1 |
| nappe (2) | 10° | 5,35 | 3 770 | 49 | 0,16 | 0,5 | 0,1 |

(1) ouvrage situé entre un plot d'infiltration et le forage central à une distance de 10 m de ce dernier.

(2) mesurée sur un ouvrage situé en amont hydraulique du forage central à une distance d'environ 50 m de celui-ci.

*Après 30 jours de fonctionnement*

| | Température de l'eau | pH | Résistivité ($\Omega \times$ cm à 20°C) | Nitrates (mg/l) | Nitrites (mg/l) | Azote ammoniacal (mg/l) | Matières organiques mg/l- oxydabilité au permanganate de potassium |
|---|---|---|---|---|---|---|---|
| forage central teneur moyenne calculée sur la sortie des 3 | 12°5 | 5,55 | 3 570 | 53 | 0,02 | 0,02 | 0 |
| réacteurs piézomètre intermédiaire | 12°3 | 7,15 | 1 830 | 23 | 1,5 | 0,02 | 5 |
| de contrôle (1) caractéristiques de l'eau de la | 10°8 | 6,20 | 2 860 | 51 | 0,35 | 0,05 | 0,225 |
| nappe (2) | 11°1 | 5,6 | 3 230 | 62 | 0,05 | 0,05 | 0 |

(1) ouvrage situé entre un plot d'infiltration et le forage central à une distance de 10 m de ce dernier.

(2) mesurée sur un ouvrage situé en amont hydraulique du forage central à une distance d'environ 50 m de celui-ci.

## Revendications

1. Procédé de dénitrification biologique par voie hétérotrophe des eaux souterraines en vue de leur potabilisation, dans lequel on introduit les eaux à traiter dans des sites d'infiltration (3, 4) et on utilise, au moins en partie, le sous-sol comme zone d'infiltration, l'eau traitée étant captée dans la nappe aquifère, caractérisé en ce qu'on effectue la réaction de dénitrification sans recourir à un enrichissement artificiel en bactéries dénitrifiantes, en ce qu'on réalise la réaction de dénitrification avant l'injection dans la nappe aquifère en faisant parvenir dans celle-ci les eaux dénitrifiées provenant de la zone de réaction (3, 4), après que celles-ci ont traversé une couche (10, 11) du sous-sol ou d'un matériau artificiel séparant la zone de réaction (3, 4) et la nappe aquifère, l'eau dénitrifiée étant, après passage sur les sites d'infiltration (3, 4), injectée dans la zone non saturée (12) à proximité du captage (5) des eaux envoyées en distribution (7).

2. Procédé selon la revendication 1, caractérisé en ce qu'on traite les eaux des nappes souterraines.

3. Procédé selon l'une des revendications 1 ou 2, caractérisé en ce qu'on effectue dans le sous-sol pratiquement la totalité de la réaction de dénitrification.

4. Procédé selon l'une des revendications 1 ou 2, caractérisé en ce qu'on effectue dans le sous-sol une

# 0 133 405

partie de la réaction de dénitrification, auquel cas une partie de la réaction se fait hors sol.

5. Procédé selon la revendication 4, caractérisé en ce que la partie de la réaction hors sol se fait dans un bac ou une colonne extérieure de percolation.

6. Procédé selon l'une quelconque des revendications 1 à 5, caractérisé en ce qu'on utilise un nombre de puits supérieur à un et en général au moins égal à deux.

7. Procédé selon l'une quelconque des revendications 1 à 6, caractérisé en ce qu'on utilise un captage central entouré de puits d'infiltration régulièrement répartis autour de lui, et par exemple au nombre de trois ou quatre.

8. Procédé selon l'une quelconque des revendications 1 à 7, caractérisé en ce que l'eau est captée dans une zone unique de prélèvement pour être renvoyée partiellement à la distribution tandis que le reste est utilisé pour l'injection en vue d'un retraitement.

9. Procédé selon l'une quelconque des revendications 1 à 7, caractérisé en ce qu'on prévoit un ouvrage de captage pour la distribution et un autre ouvrage dans lequel l'eau captée est réinjectée dans les sites d'infiltration.

10. Procédé selon l'une quelconque des revendications 1 à 9, caractérisé en ce qu'on remplit les sites d'infiltration avec un mélange contenant un substrat carboné et un support minéral.

11. Procédé selon la revendication 10, caractérisé en ce que le substrat carboné est un matériau solide hydrocarboné biodégradable susceptible de fournir le carbone nécessaire à la dénitrification hétérotrophique.

12. Procédé selon la revendication 11, caractérisé en ce que le substrat carboné provient de sous-produits de l'industrie agroalimentaire, tels que des résidus de récoltes, par exemple la paille ou des copeaux de bois.

13. Procédé selon l'une quelconque des revendications 10 à 12, caractérisé en ce qu'on enrichit le sol ou l'on remplace le sol des sites d'infiltration avec un support minéral à base de sable et/ou de roches carbonatées broyées, tels que le maerl, permettant de tamponner le milieu.

14. Procédé selon l'une quelconque des revendications 1 à 13, caractérisé en ce qu'on réalise la réaction de dénitrification en présence d'un mélange de paille et de maerl.

15. Procédé selon l'une quelconque des revendications 1 à 14, caractérisé en ce qu'on utilise des vitesses lentes de filtration, de l'ordre de quelques dizaines de cm/heure.

16. Procédé selon l'une quelconque des revendications 1 à 15, caractérisé en ce qu'on renouvelle périodiquement le contenu des sites d'infiltration, le remplissage usé étant évacué et remplacé par un produit de remplissage neuf.

17. Procédé selon la revendication 16, caractérisé en ce que, en vue du renouvellement périodique du contenu des sites d'infiltration, on injecte de l'eau sous pression à la partie basse du site, le remplissage usé étant alors évacué à la partie haute du puits, après quoi on introduit un remplissage neuf dans le puits.

**Patentansprüche**

1. Verfahren zum biologischen Denitrieren von Grundwasser in Bezug auf dessen Trinkbarkeit, auf heterotropher Basis, gemäss dem man das zu behandelnde Wasser in Sickerstellen (3, 4) einführt und den Untergrund wenigstens teilweise als Sickerzone benutzt, wobei das behandelte Wasser aus der wasserführenden Untergrundschicht gewonnen wird, dadurch gekennzeichnet, dass man die Denitrierungsreaktion ohne Zuhilfenahme einer künstlichen Anreicherung von denitrierenden Bakterien bewirkt, dass man die Denitrierungsreaktion vor dem Einführen in die wasserführende Untergrundschicht durchführt, indem man das denitrierte Wasser in diese Schicht gelangen lässt, wobei dieses Wasser aus der Reaktionszone (3, 4) kommt, nachdem es eine Schicht (10, 11) des Untergrundes oder eines künstlichen Materials, das die Reaktionszone (3, 4) und die wasserführende Untergrundschicht trennt, durchquert hat, dass das denitrierte Wasser nach seinem Durchgang durch die Sickerstellen (3, 4) in eine nichtgesättigte Zone (12) in Nähe einer Wassersammelstelle (5) für die Verteilung (7) des Wassers eingeleitet wird.

2. Verfahren nach Anspruch 1, dadurch gekennzeichnet, dass man das Wasser der Untergrundschichten behandelt.

3. Verfahren nach Anspruch 1 oder 2, dadurch gekennzeichnet, dass man in Untergrundschichten praktisch die gesamte Denitrierungsreaktion durchführt.

4. Verfahren nach Anspruch 1 oder 2, dadurch gekennzeichnet, dass man in den Untergrundschichten einen Teil der Reaktion der Denitrierung durchführt, in welchem Fall ein Teil der Reaktion ausserhalb des Erdbodens durchgeführt wird.

5. Verfahren nach Anspruch 4, dadurch gekennzeichnet, dass der ausserhalb des Erdbodens stattfindende Reaktionsteil in einem Behälter oder in einer Kolonne ausserhalb der Sickerstelle durchgeführt wird.

6. Verfahren nach einem der Ansprüche 1 bis 5, dadurch gekennzeichnet, dass man eine Zahl von Schächten grösser eins und im allgemeinen wenigstens zwei Schächte benutzt.

7. Verfahren nach einem der Ansprüche 1 bis 6, dadurch gekennzeichnet, dass man eine zentrale Sammelstelle verwendet, die von Sickerschächten umgeben ist, die gleichmässig um die Sammelstelle verteilt angeordnet sind und z.B. aus drei oder vier Sickerschächten bestehen.

8. Verfahren nach einem der Ansprüche 1 bis 7, dadurch gekennzeichnet, dass das Wasser in einer einzigen Entnahmezone gesammelt wird, um teilweise der Verteilung zugeführt zu werden, während der Rest zum Einführen zwecks erneuter Behandlung verwendet wird.

9. Verfahren nach einem der Ansprüche 1 bis 7, dadurch gekennzeichnet, dass man einen Entnahmeaufbau für das Verteilen und einen anderen Aufbau vorsieht, mit welch letzterem entnommenes Wasser wieder in die Sickerstellen geführt wird.

10. Verfahren nach einem der Ansprüche 1 bis 9, dadurch gekennzeichnet, dass man die Sickerstellen mit einer Mischung füllt, die ein kohlenstoffhaltiges Substrat und einen mineralischen Träger enthält.

11. Verfahren nach Anspruch 10, dadurch gekennzeichnet, dass das kohlenstoffhaltige Substrat ein festes, kohlenwasserstoffhaltiges, biologisch abbaubares Material ist, welches in der Lage ist, den erforderlichen Kohlenstoff nach Art der heterotrophen Denitrierung zur Verfügung zu stellen.

12. Verfahren nach Anspruch 11, dadurch gekennzeichnet, dass das kohlenstoffhaltige Substrat aus Nebenprodukten der landwirtschaftlichen Industrie wie Ernterückständen, z.B. Stroh oder Holzspäne, stammt.

13. Verfahren nach einem der Ansprüche 10 bis 12, dadurch gekennzeichnet, dass man den Erdboden anreichert mit einem oder den Erdboden der Sickerstellen ersetzt durch einen mineralischen Träger auf der Basis von Sand und/oder gebrochenem, karbonisiertem Gestein wie Maerl der erlaubt, das Medium zu puffern.

14. Verfahren nach einem der Ansprüche 1 bis 13, dadurch gekennzeichnet, dass man die Denitrierungsreaktion in Anwesenheit einer Mischung aus Stroh und Maerl durchführt.

15. Verfahren nach einem der Ansprüche 1 bis 14, dadurch gekennzeichnet, dass man langsame Filtriergeschwindigkeiten in der Grössenordnung von einigen Zehnfachen von cm/h anwendet.

16. Verfahren nach einem der Ansprüche 1 bis 15, dadurch gekennzeichnet, dass man den Inhalt der Sickerstellen periodisch erneuert, wobei die benutzte Füllung entleert und durch ein neues Füllprodukt ersetzt wird.

17. Verfahren nach Anspruch 16, dadurch gekennzeichnet, dass man hinsichtlich der periodischen Erneuerung des Inhaltes der Sickerstellen Wasser unter Druck in den unteren Teil der Sickerschächte einführt und dass dann die benutzte Füllung aus dem oberen Teil der Schächte entleert wird, wonach man eine neue Füllung in die Schächte einführt.

## Claims

1. Process for biological denitrification of groundwater by a heterotrophic method for the purpose of rendering it potable, wherein the water to be treated is introduced into infiltration sites (3, 4) and the subsoil is used, at least in part, as an infiltration zone, the treated water being collected in the aquifer, characterized in that the denitrification reaction is performed without resorting to artificial enrichment with denitrifying bacteria, and in that the denitrification reaction is carried out before the injection into the aquifer, by conveying to the latter the denitrified water originating from the reaction zone (3, 4) after the water has passed through a layer (10, 11) of the subsoil or of an artificial material separating the reaction zone (3, 4) and the aquifer, the denitrified water being injected, after passage through the infiltration sites (3, 4), into the unsaturated zone (12) in the vicinity of the site of collection (5) of the water supplied for distribution (7).

2. Process according to Claim 1, characterized in that the water treated is from groundwater tables.

3. Process according to one of Claims 1 and 2, characterized in that virtually all the denitrification reaction is performed in the subsoil.

4. Process according to one of Claims 1 and 2, characterized in that part of the denitrification reaction is performed in the subsoil, in which case part of the reaction is carried out outside the soil.

5. Process according to Claim 4, characterized in that the part of the reaction outside the soil is carried out in an external percolation tank or column.

6. Process according to any one of Claims 1 to 5, characterized in that a number of wells greater than one, and generally equal to at least two, is used.

7. Process according to any one of Claims 1 to 6, characterized in that a central collection site is used, surrounded by infiltration wells distributed regularly around it and numbering, for example, three or four.

8. Process according to any one of Claims 1 to 7, characterized in that the water is collected in a single withdrawal zone and partially sent for distribution, while the remainder is used for injection for the purpose of a retreatment.

9. Process according to any one of Claims 1 to 7, characterized in that a collection outlet is provided for distribution, and another outlet in which the collected water is reinjected into the infiltration sites.

10. Process according to any one of Claims 1 to 9, characterized in that the infiltration sites are filled with a mixture containing a carbon-containing substrate and an inorganic support.

11. Process according to Claim 10, characterized in that the carbon-containing substrate is a biodegradable solid hydrocarbon material capable of supplying the carbon necessary for heterotrophic denitrification.

12. Process according to Claim 11, characterized in that the carbon-containing substrate originates from by-products of the agri-foodstuffs industry, such as harvest residues, for example straw, or wood shavings.

13. Process according to any one of Claims 10 to 12, characterized in that enrichment of the soil or replacement of the soil of the infiltration sites is carried out with an inorganic support based on sand and/or ground carbonate-containing rocks, such as maerl, enabling the medium to be buffered.

14. Process according to any one of Claims 1 to 13, characterized in that the denitrification reaction is carried out in the presence of a mixture of straw and maerl.

15. Process according to any one of Claims 1 to 14, characterized in that slow filtration rates, of the order of a few tens of cm/hour, are used.

16. Process according to any one of Claims 1 to 15, characterized in that the content of the infiltration sites is periodically renewed, the spent filling being discharged and replaced by a new filling product.

17. Process according to Claim 16, characterized in that, for the purpose of the periodic renewal of the content of the infiltration sites, water is injected under pressure at the bottom of the site, the spent filling then being discharged at the top of the well, after which a new filling is introduced into the well.

FIG.1

FIG.2